# EUROPÄISCHE PATENTANMELDUNG

(11) **EP 2 267 657 A1**
(43) Veröffentlichungstag der Anmeldung: **29.12.2010**
(21) Anmeldenummer: 10165553.8
(22) Anmeldetag: 10.06.2010
(51) Int. Cl.: G06T 7/00

(54) **Optische Erfassungseinheit zur Umrisserkennung von Objekten**

(30) Priorität: 22.06.2009 DE 102009030111
(71) Anmelder: SIEMENS AKTIENGESELLSCHAFT, 80333 München (DE)
(72) Erfinder: Karger, Stephan, 76744 Wörth am Rhein (DE); Müller, Peter-Michael, 75045 Walzbachtal-Wössingen (DE)

(57) **Zusammenfassung**

Optische Erfassungseinheit zur Umrisserkennung von Objekten Die erfindungsgemäße optische Erfassungseinheit weist einen über die Abmessungen des zu untersuchenden Objektes (10) hinausgehenden Aufnahmebereich (20) und eine Kamera zur Erzeugung einer monochromen, datentechnisch auswertbaren Bildaufnahme des Aufnahmebereiches mit dem Objekt (10) auf. Weiterhin befindet sich im Aufnahmebereich (20) ein regelmäßiges Flächenmuster (30), welches das Objekt (10) in der Art eines Bildhintergrundes vollständig umgibt. Die optische Erfassungseinheit verfügt weiterhin über Bildverarbeitungsmittel mit einem an das Flächenmuster (30) angepassten Filter. Dieses verstärkt und/oder blendet die Pixel der zum Flächenmuster (30) gehörigen und nicht vom Objekt abgedeckten Bereiche (31) in der Bildaufnahme (20) so aus, dass demgegenüber der Umriss (14) des zu untersuchenden Objektes (10) eindeutig abgrenzbar und datentechnisch erfassbar ist.

## Beschreibung

Die Erfindung betrifft eine optische Erfassungseinheit mit einer Kamera und daran angeschlossenen Bildverarbeitungsmitteln.

Aus einer von der Kamera erzeugten Bildaufnahme eines Objektes soll mit Hilfe der Bildverarbeitungsmittel der geometrische Umriss des Objektes berechnet werden. Hierbei ist es erforderlich, dass die Kanten des auszuwertenden Objektes von der optische Erfassungseinheit um das gesamte Objekt herum lückenlos erfasst werden können. Dies setzt einen möglichst großen Kontrast zwischen den Objektkanten und dem Bildhintergrund voraus.

Dabei können jedoch insbesondere dann Probleme auftreten, wenn die Oberfläche eines Objektes sehr kontrastreich ist. Objekte dieser Art können z.B. eine hoch reflektierende Oberfläche aufweisen, bzw. ein Muster von abwechselnd stark reflektierenden und absorbierenden Zonen auf der Oberfläche enthalten.

Die Praxis hat gezeigt, dass sich die optische Erfassungseinheit in einem solchen Fall nur für Teilbereiche der Kanten des Objektes optimal einstellen lässt, während andere Kantenbereiche schlecht abbildbar bzw. auf der Bildaufnahme u.U. sogar unsichtbar sind. Derartige quasi blinde Zonen in der Bildaufnahme lassen sich in der Regel auch nicht durch geeignete Vorgaben an den technischen Einstellmöglichkeiten der Kamera vermeiden, wie z.B. der Blendenöffnungszeit bzw. der Verstärkung. Im Ergebnis ist dann keine fehlerfreie Erkennung des geschlossenen Umrisses des zu untersuchenden Objektes möglich.

Als ein Beispiel für derartige Objekte sollen reflektierende Platten aus polykristallinem Silizium genannt werden. Polykristallines Silizium besteht aus kleinen, zusammenhängenden Kristallen, die eine Größe von einigen Millimetern bis Zentimetern und unterschiedlichste Ausrichtungen aufweisen. Dies hat zur Folge, dass die Oberfläche einer derartigen polykristallinen Siliziumplatte Zonen aufweist, welche einfallendes Licht entweder sehr stark reflektieren oder stark absorbieren. Zudem können diese Reflexions- bzw. Absorptionseigenschaften vom Beleuchtungswinkel abhängig sein. Wird also die Kamera einer optischen Erfassungseinheit bezüglich der gesamten Fläche der Bildaufnahme annähernd optimal eingestellt, dann hebt sich die Kante einer solchen Siliziumplatte kontrastmäßig in Teilbereichen nicht vom Hintergrund ab und ist somit quasi unsichtbar.

Es ist bekannt, derartige Probleme z.B. durch den Einsatz einer optischen Erfassungseinheit zu lösen, welche farbige Bildaufnahme eines zu untersuchenden Objektes erzeugen kann. Hiermit lassen sich zwar in der Regel alle Bereiche eines Objektumrisses trotz unterschiedlichster Reflexions- bzw. Absorptionseigenschaften erkennen. Bei einer derartigen Erfassungseinheit muss allerdings ein teurer Farbsensor eingesetzt werden. Weiterhin verfügen diese über eine nur reduzierte Auflösung.

Zur Lösung derartiger Probleme ist es weiterhin bekannt, die Reflexionseigenschaften der Objektoberfläche entweder durch den eine Belichtung mit kurzwelligerem Licht oder durch Manipulationen des Aufnahmewinkels zu beeinflussen.

Der Erfindung liegt die Aufgabe zu Grunde eine weitere, zur Lösung des oben angeführten Problems geeignete, aber gegenüber dem Stand der Technik hardwaremäßig weniger aufwendige und einfacher zu handhabende optische Erfassungseinheit anzugeben.

Die Aufgabe wird mit der im Anspruch 1 angegebenen optischen Erfassungseinheit gelöst. Vorteilhafte weitere Ausführungsformen sind in den Unteransprüchen angegeben.

Die erfindungsgemäße optische Erfassungseinheit weist einen über die Abmessungen des zu untersuchenden Objektes hinausgehenden Aufnahmebereich und eine Kamera zur Erzeugung einer monochromen, datentechnisch auswertbaren Bildaufnahme des Aufnahmebereiches mit dem darin befindlichen Objekt auf. Weiterhin ist erfindungsgemäß der Aufnahmebereich in der Art eines Bildhintergrundes mit einem regelmäßigen Flächenmuster versehen, welches ein darauf liegendes, zu untersuchendes Objekt vollständig umgibt.

Die Bildverarbeitungsmittel der optischen Erfassungseinheit sind schließlich mit einem signalangepassten Filter ausgestattet. Dieses ist so an das regelmäßige Flächenmuster angepasst, dass dessen innere Struktur im Bild verstärkt wird. Auf diese Weise lässt sich signaltechnisch der Bildhintergrund vom Objekt abgrenzen, und der Umriss des zu untersuchenden Objektes kann eindeutig erfasst werden.

Besonders vorteilhaft besteht das regelmäßige Flächenmuster aus einer Vielzahl von in 2 Dimensionen wiederkehrend angeordneten Einzelmustern. Ein Einzelmuster ist vorteilhaft so beschaffen, das dieses mit möglichst geringer Wahrscheinlichkeit auf dem Objekt vorkommt, dessen Kanten detektiert werden sollen. Das Einzelmuster ist weiterhin so zu wählen, dass es durch die in der Kamera zur Verfügung stehende Auflösung ausreichend gut abgetastet wird und dass es sich durch ein an das Einzelmuster angepasstes Filter gut erkennen und lokalisieren lässt. Das Einzelmuster kann aus einer festen Anzahl unterschiedlicher Grauwerte bestehen, oder aus kontinuierlichen Grauwerten zusammengesetzt sein.

Es ist vorteilhaft, wenn die Bildverarbeitungsmittel Prozessormittel aufweisen, und das signalangepasste Filter in Form eines softwaremäßigen Algorithmus in den Bildverarbeitungsmitteln der optischen Erfassungseinheit implementiert ist. Weiterhin ist es vorteilhaft für den Fall, dass über die Reflexion des Objektes nichts bekannt ist, das regelmäßige Flächenmuster so auszuprägen, dass dieses bei einer Bearbeitung durch die Bildverarbeitungsmittel mit Hilfe einer Frequenztransformation ein möglichst konstantes Signal ergibt ist. In diesem Fall wirkt dieses Hintergrundsignal als eine Art Rauschen und hebt sich nach der Filterung besonders gut vom Vordergrund ab.

Gegebenenfalls ist die optische Erfassungseinheit mit zusätzlichen künstlichen Beleuchtungsmitteln für den Aufnahmebereich und das darin platzierte Unersuchungsobjekt ausgestattet, z.B. mit einer LED Beleuchtungseinheit.

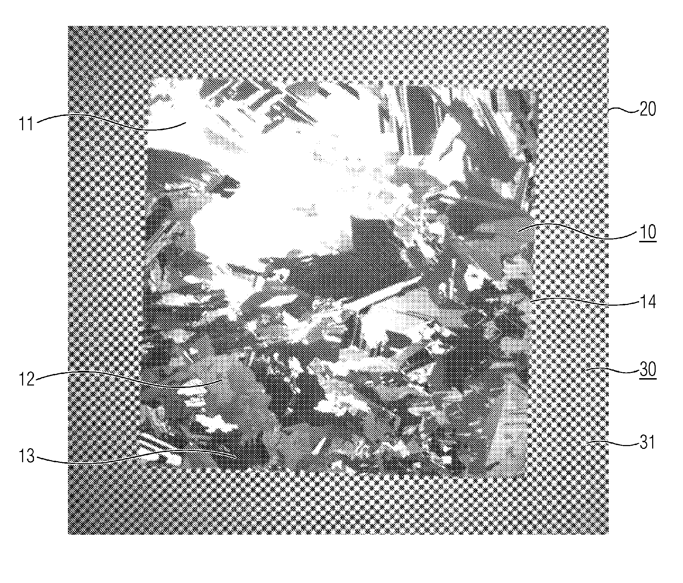

Die Erfindung wird nachfolgend an Hand der beiliegenden Figur näher erläutert.

In dieser ist ein zu untersuchendes Objekt 10 gezeigt, z.B. eine Platte aus polykristallinem Silizium. Dieses weist eine Vielzahl von stark reflektierenden Oberflächenzonen 11 (weis dargestellt), durchschnittlich reflektierenden bzw. absorbierenden Oberflächenzonen 12 (grau dargestellt) und stark absorbierenden Oberflächenzonen 13 (schwarz dargestellt) auf. Zonen dieser Art reichen auch jeweils bis zum Rand 14 des zu untersuchenden Objektes, so dass diese in unregelmäßigen Abschnitten wechselt zwischen den Zuständen stark reflektierend, durchschnittlich reflektierend bzw. absorbierend oder stark absorbierend. Der im Beispiel der Figur quadratische Umriss 14 ist somit nicht ohne weiteres durchgängig detektierbar.

Zur Lösung dieses Problems befindet sich das Objekt 10 in einem Aufnahmebereich 20 einer Kamera der erfindungsgemäßen Erfassungseinheit. Dieser weist Abmessungen auf, welche über die Abmessungen des zu untersuchenden Objektes 10 hinausgehen. Auf diese Weise wird ein im Aufnahmebereich 20 befindliches regelmäßiges Flächenmuster 30 sichtbar, welches im Beispiel schachbrettartig ausgeführt ist. Das Objekt 10 wird somit von einem ringförmigen, vom Untersuchungsobjekt nicht abgedeckten Bereich 31 des Flächenmusters 30 rahmenartig umgeben.

Erfindungsgemäß greifen auf ein an das Flächenmuster 30 angepasstes Filter der Bildverarbeitungsmittel der optischen Bildaufnahmevorrichtung ein. Dieses verstärkt und/oder blendet die Pixel der zum Flächenmuster 30 gehörigen und nicht vom Objekt 10 abgedeckten Bereiche 31 in der Bildaufnahme 20 so aus, dass demgegenüber der Umriss 14 des zu untersuchenden Objektes 10 eindeutig abgrenzbar und datentechnisch erfassbar ist.

Die Erfindung bietet den Vorteil, dass die Bildverarbeitungsmittel mit Hilfe des Signalfilters, welches an die durch das regelmäßige Flächenmuster in der Bildaufnahme hervorgerufenen Signals angepasst ist, die Signale des vom Untersuchungsobjekt nicht abgedeckten Bereiches des Flächenmusters in der Bildaufnahme eindeutig vom Untersuchungsobjekt selbst unterscheiden und somit dessen Umriss fehlerfrei detektieren können.

Für einen Anwender ist die Erfindung mit einem nur geringen Aufwand umsetzbar, da sich ein regelmäßiges Flächenmuster auf einfache Weise herstellen und hinter einem zu untersuchenden Objekt platzieren lässt. Weiterhin kann das signalangepasste Filter kostengünstig als Software in den Bildverarbeitungsmitteln implementiert und dort quasi im Hintergrund ausgeführt werden.

## Patentansprüche

1. Optische Erfassungseinheit zur Erkennung des Umrisses (14) eines Objektes (10) , mit
- einem über die Abmessungen des zu untersuchenden Objektes (10) hinausgehenden Aufnahmebereich (20),
- einer Kamera zur Erzeugung einer monochromen, datentechnisch auswertbaren Bildaufnahme des Aufnahmebereiches mit Objekt (10),
- einem regelmäßigen Flächenmuster (30) im Aufnahmebereich (20), welches das Objekt (10) in der Art eines Bildhintergrundes vollständig umgibt, und mit
- Bildverarbeitungsmitteln, die ein an das Flächenmuster (30) angepasstes Filter aufweisen, welches die Pixel der zum Flächenmuster (30) gehörigen und nicht vom Objekt abgedeckten Bereiche (31) in der Bildaufnahme (20) so verstärken und/oder ausblenden, dass demgegenüber der Umriss (14) des zu untersuchenden Objektes (10) eindeutig abgrenzbar und datentechnisch erfassbar ist.

2. Optische Erfassungseinheit nach Anspruch 1, wobei die Bildverarbeitungsmittel Prozessormittel aufweisen und das signalangepasste Filter in Form eines softwaremäßigen Algorithmus implementiert ist.

3. Optische Erfassungseinheit nach Anspruch 1 oder 2, wobei das regelmäßige Flächenmuster (30) aus einer Vielzahl von in zwei Dimensionen wiederkehrend angeordneten Einzelmustern besteht.

4. Optische Erfassungseinheit nach Anspruch 3, wobei das regelmäßige Flächenmuster (30) so ausgeprägt ist, dass dieses nach der Bearbeitung durch die Bildverarbeitungsmittel mit Hilfe einer Frequenztransformation ein möglichst konstantes Hintergrundsignal in der Art eines Rauschens ergibt.
